# EUROPEAN PATENT SPECIFICATION

(11) **EP 3 412 368 B1**
(45) Date of publication and mention of the grant of the patent: **17.01.2024**
(21) Application number: 17747521.7
(22) Date of filing: 02.02.2017
(51) Int. Cl.: B07C 5/36, B07C 3/02, B65G 43/08

(54) **AUTOMATIC PROCESSING DEVICE, AUTOMATIC PROCESSING METHOD, AND PROGRAM**
VORRICHTUNG ZUR AUTOMATISCHEN BEHANDLUNG, VERFAHREN ZUR AUTOMATISCHEN BEHANDLUNG UND PROGRAMM
DISPOSITIF DE TRAITEMENT AUTOMATIQUE, PROCÉDÉ DE TRAITEMENT AUTOMATIQUE, ET PROGRAMME

(30) Priority: 05.02.2016 JP 2016020437
(43) Date of publication of application: 12.12.2018
(73) Proprietor: NEC Corporation, Tokyo 108-8001 (JP)
(72) Inventor: YOSHITANI, Kazuhito, Tokyo 108-8001 (JP); TAKAHASHI, Naoyuki, Tokyo 108-8001 (JP); FUJIYAMA, Satoshi, Tokyo 108-8001 (JP); NAKAYAMA, Hiroyuki, Kawasaki-shi Kanagawa 213-8511 (JP)
(74) Representative: Betten & Resch
(86) International application number: PCT/JP2017/003785
(87) International publication number: WO 2017/135370

(56) References cited:
- EP-A1- 1 873 100
- JP-A- H1 179 372
- JP-A- H1 179 372
- JP-A- S5 992 069
- JP-A- S5 992 069
- JP-A- 2012 025 428
- US-A- 5 462 268
- US-A- 6 126 017
- US-A- 6 126 017
- US-A1- 2015 271 399

## Description

### [Technical Field]

The present invention relates to an automatic processing apparatus, an automatic processing method, and a program therefor, which automatically sorts a transporting object.

### [Background Art]

An automatic processing apparatus is known in which an object having a predetermined thickness and an object exceeding a predetermined thickness are transported in a mixed manner. The apparatus has transport means that can transport objects exceeding a predetermined thickness.

An example of the automatic processing apparatus is described in PTL 1. A transport box described in PTL 1 includes therein an accordion-like shaped sheet formed into convex positions and concave positions by alternately folding a single sheet of paper, a plastic sheet, or a woven cloth. Each of convex folded portions formed on the accordion-like shaped sheet is a partition between objects in the transport box.

In addition, the article sorting apparatus described in PTL 2 has large vans and small vans of different sizes. Large vans transfer large articles and small articles, and small vans transfer small articles exclusively.

An article sorting distribution apparatus described in the PTL 3 includes an object input unit having a data reading mechanism for reading identification information such as sorting destination data assigned to an object to be input and a transport basket to which a basket number is assigned. The transport basket releases the object to a desired sorting destination shoot unit identified by the identification information given to the object.

### [Citation List]

### [Patent Literature]

[PTL 1] Japanese Patent Laid-Open No. 2012-025428
[PTL 2] Japanese Patent Laid-Open No. H04(1992)-116018
[PTL 3] Japanese Patent Laid-Open No. 2005-350250

### [Summary of Invention]

### [Technical Problem]

However, the technique described in PTL 1 is a technique of accommodating the object with adjusting the width of the partition, that is, adjusting the distance between the individual convex folded portions of the sheet, which is a soft material. Therefore, the technology described in PTL 1 only discloses a transport box that is excellent in shock resistance and can deal with various shapes of products, and there is no disclosure in PTL 1 of control on transport of transport objects with transport apparatus.

Also, in the technology described in PTL 2, large vans and small vans with different sizes circulate in the apparatus in a mixed manner. Adjustment of the position or timing of a van at the time of release is necessary between a case of discharging an article from a large van for sort and a case of discharging an article from a small van for sort. For example, when releasing articles from a van that arrives at the position of discharging article subsequently, among the vans circulating on the belt transporter, the arrival time of the subsequent van is different between the case where the currently arriving van is a large van and the case where the currently arriving van is a small van. That is, if the currently arriving van is large van, the arrival time of the subsequent van is later because the transit time is long. On the other hand, if the currently arriving van is small van, the arrival time of the subsequent van is early because the transit time is short. Therefore, in order to deal with small van and large van in the same way, it is necessary to: control the transit times to be at the same time by changing the circulation speed when passing a small van and passing a large van; delay the timing of release from a large van more greatly than the timing of release from a small van; or adjust the distance between a preceding van and a subsequent van according to whether they are small vans or large vans. Therefore, the technique described in PTL 2 has a problem in that it is necessary to perform width adjustment of vans, complicated release, and transport speed control such as, e.g., control of circulation speed and release timing and adjustment of distance between vans in accordance with the placement of large van and small van.

In the technique described in PTL 3, a single type of transport basket moves through the circulation transport path, and the object in the transport basket is released to a predetermined sorting destination shoot unit. Therefore, the technology described in PTL 3 cannot control transport differently depending on the size of object. In other words, it is necessary to design a transported input unit of article sorting distribution apparatus, a transfer basket, and a transport basket according to the largest object. Therefore, the technology described in PTL 3 has a problem in that the efficiency of transport is poor because the technology described in PTL 3 uses a transport basket etc. for a large object even for a small object.

It is an example of an object of the example embodiment to provide an automatic processing apparatus, an automatic processing method, and a program capable of solving the above-mentioned problems. Specifically, it is an example of an object of the example embodiment to provide an automatic processing apparatus, an automatic processing method, and a program that can transport an object up to a predetermined thickness and an object exceeding a predetermined thickness without adjusting a transport box and without requiring a complicated control.

Documents JP S 5992069 A and US 6 126 017 A are disclosing devices to sort and transport objects in boxes where the objects coming from feed units are accommodated.

### [Solution to Problem]

The present invention is defined in the independent claims. The dependent claims defined embodiments of the invention.

### [Advantageous Effects of Invention]

According to the present invention, an effect of being able to transport an object up to a predetermined thickness and an object exceeding a predetermined thickness without adjusting a transport box and without requiring a complicated control can be obtained.

### [Brief Description of Drawings]

Fig. 1 is a block diagram showing a configuration of automatic processing apparatus 1000.
Fig. 2 is a top view of the automatic processing apparatus 1000, as seen from above in the z-axis direction.
Fig. 3 is a side view of an example of the automatic processing apparatus 1000, as seen from positive direction from negative direction in the x-axis.
Fig. 4 is a top view showing an example of a configuration of a feed unit 110 and a recognition unit 130.
Fig. 5 is a top view showing an example of a configuration of the feed unit 120 and the recognition unit 130.
Fig. 6 is a perspective view showing an example of a configuration of a transport box 142 of a transport unit 140.
Fig. 7 is a perspective view showing another example of a configuration of a transport box 142 of a transport unit 140 .
Fig. 8 is a perspective view showing an example of a configuration of a partition box 141 of the transport unit 140 .
Fig. 9 is a perspective view showing another example of a configuration of a partition box 141 of the transport unit 140.
Fig. 10 is a top view showing a part of the transport unit 140 according to an example of a configuration of a feed unit 110 and a feed unit 120.
Fig. 11 is a diagram showing an example of information about accommodated object and a partition box 141 recorded in the storage unit not shown in Fig. 10.
Fig. 12 shows the outline of the operation of processing in which the control unit 100 in the automatic processing apparatus 1000 controls the feed of objects to the partition box 141 of the feed unit 110 and the feed unit 120.
Fig. 13 is a top view showing a part of the transport unit 140 and a configuration of the feed unit 110 and the feed unit 120.
Fig. 14 is a side view showing an example of a configuration of the transport unit 140 and the sort unit 150.
Fig. 15 is a side view showing another example of a configuration of a transport unit 140 and a sort unit 150.
Fig. 16 is a diagram showing an example of a hardware configuration when the automatic processing apparatus 1000 is realized by a computer apparatus.
Fig. 17 is a block diagram showing a configuration of an automatic processing apparatus 1001 according to an alternative.

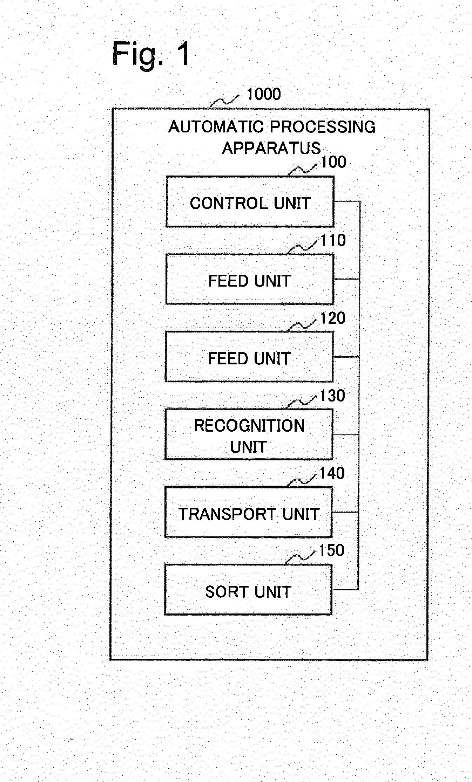

Fig. 1 is a block diagram showing a configuration of an automatic processing apparatus 1000 according to the first alternative.

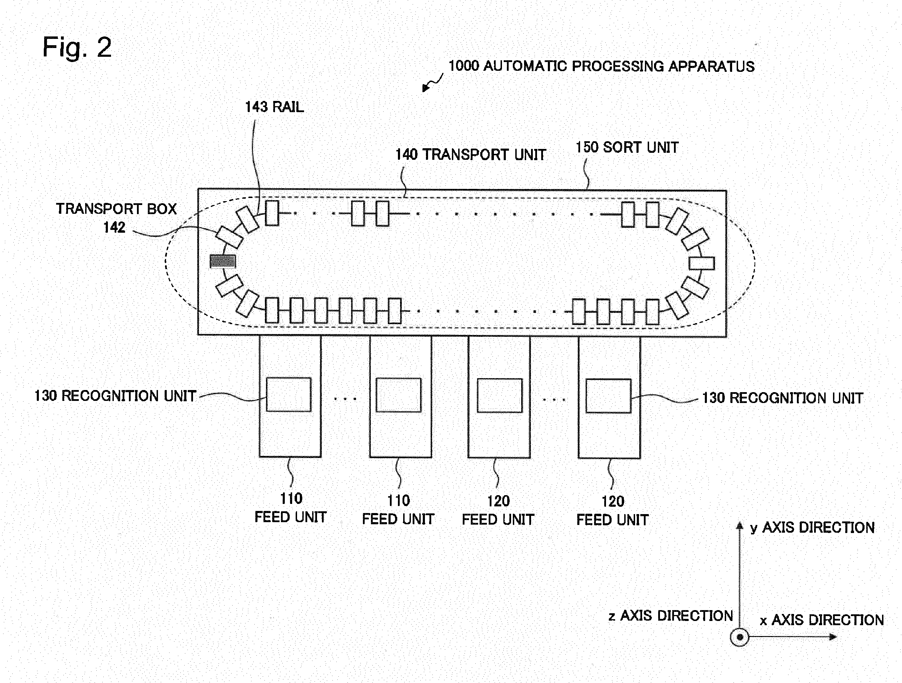

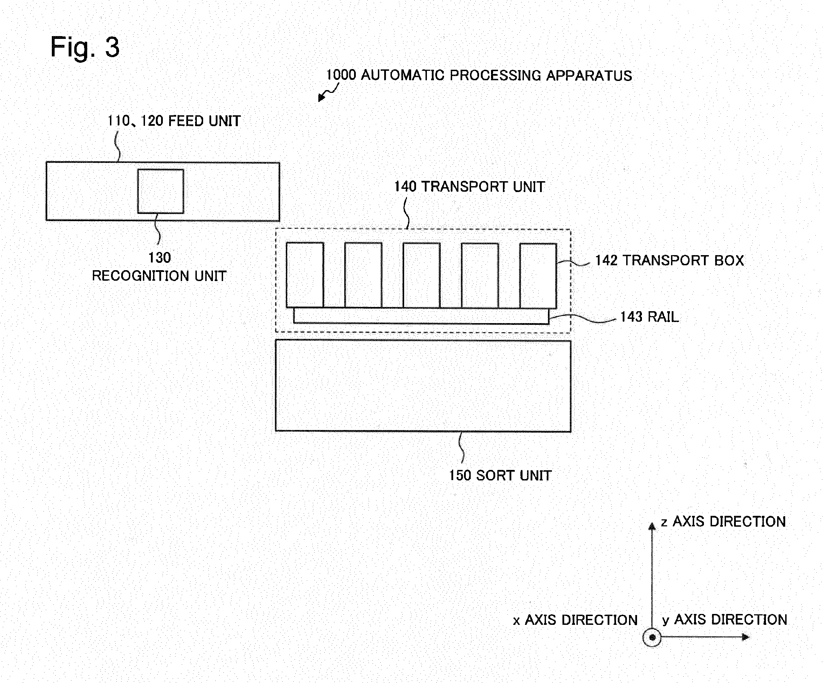

When Fig. 1 is referred to, the automatic processing apparatus 1000 includes a control unit 100, feed units 110, 120, a recognition unit 130, a transport unit 140, and a sort unit 150. The control unit, the feed unit, the recognition unit, the transport unit, the sort unit may also be called control means, feed means, recognition means, transport means, sort means, respectively. Fig. 2 is a top view of an example of an automatic processing apparatus 1000 according to the first alternative, as seen from above in the z axis (vertical) direction. Fig. 3 is a side view of an example of the automatic processing apparatus 1000 as seen from positive direction from negative direction in the x axis. However, the control unit 100 is not shown in Fig. 2 and Fig. 3. When Fig. 3 is referred to, the transport unit 140 is positioned lower than the feed units 110 and 120 in the z-axis direction. The sort unit 150 is located below the transport unit 140 in the z axis direction.

Subsequently, the configuration of the automatic processing apparatus 1000 in the first alternative will be described.

The control unit 100 controls all operations of the automatic processing apparatus 1000. Specifically, the control unit 100 receives the address information of the object acquired by the recognition unit 130. The control unit 100 determines the partition box 141 of the transport box 142 of the transport unit accommodating the object based on which feed unit from among the plurality of feed units 110 and the plurality of feed units 120 the object is fed from, and performs control to accommodate the object in the determined partition box 141. The control unit 100 also determines the location of the sort unit 150 that releases the object from the partition box 141 based on the received address information of the object and performs control to release the object based on the accommodation information of the object and the configuration information of the partition box 141 of the transport box 142. Specific processing will be described later. The address information of object is also referred to as first information of object. The transport boxes 142 is arranged at equal width on the rail 143.

The control unit 100 may be provided anywhere within the automatic processing apparatus 1000. Further, the control unit 100 may be provided as a part of one of the feed unit 110, the feed unit 120, the recognition unit 130, the transport unit 140, and the sort unit 150.

The feed units 110 and 120 feed the accepted objects to the transport unit 140 positioned below the z-axis from the feed units 110 and 120. One or more feed units 110 and 120 may be provided, but in Fig. 2, they are shown as a plurality of feed units, respectively. The ranges of the thicknesses of the objects that can be handled by the feed unit 110 and the feed unit 120 are different The feed unit 110 feeds objects up to the predetermined thickness to the transport unit 140. In addition to the object up to the predetermined thickness, the feed unit 120 can also feed objects with a thickness exceeding the predetermined thickness to the transport unit 140.

The recognition unit 130 is provided inside the feed units 110 and 120 and recognizes and obtains the address information of the object described on the surface of the object received by the feed unit 110 and the feed unit 120.

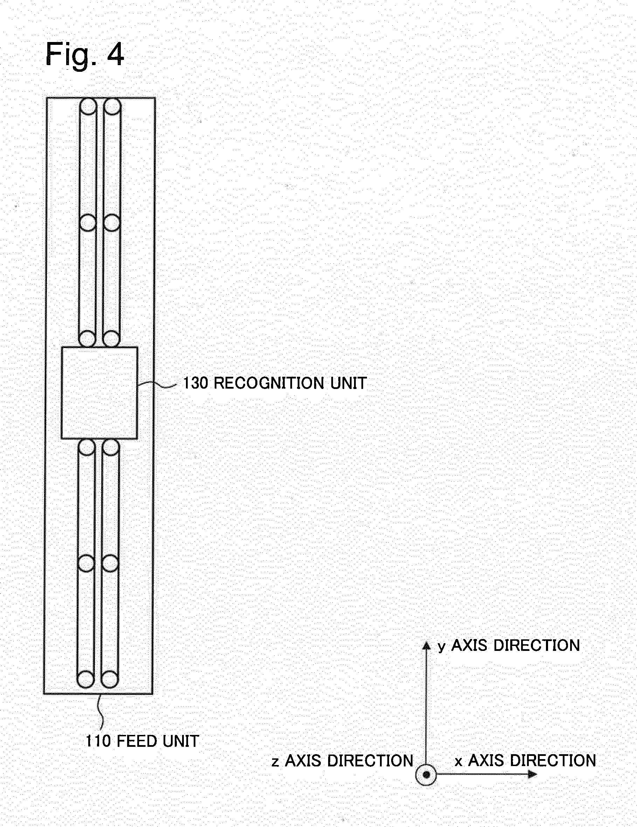

Fig. 4 is a top view showing an example of a configuration of the feed unit 110 and the recognition unit 130.

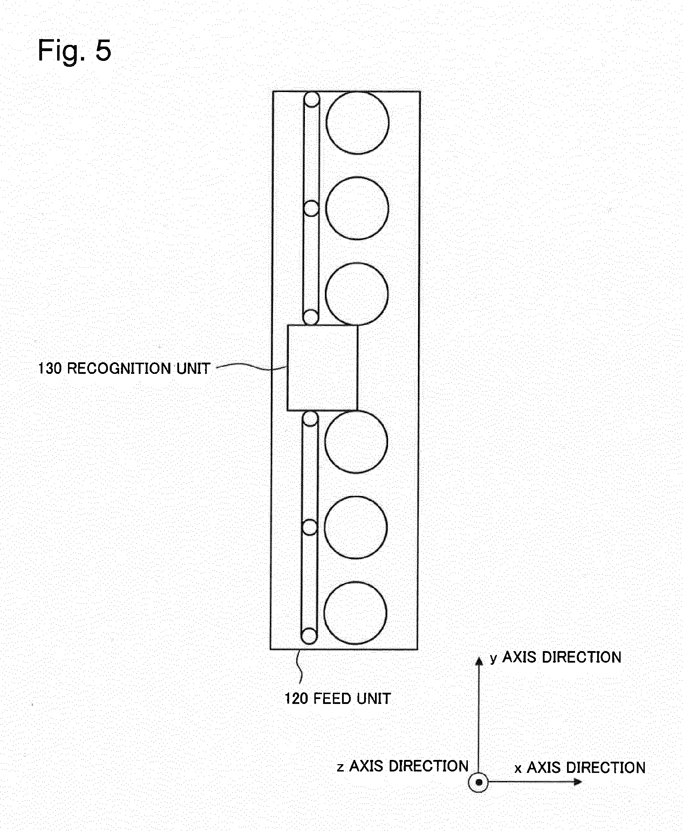

Fig. 5 is a top view showing an example of the configuration of the feed unit 120 and the recognition unit 130.

In Fig. 4 and Fig. 5, the feed unit 110 or the feed unit 120 and the recognition unit 130 are assumed to have no member covering the upper surface, but in order to prevent incorporation of member irrelevant to transport, for example, it may be possible to a structure in which the upper surface and the side surface are covered with sheet metal.

An object is input from the lower end of Fig. 4 and Fig. 5 of the feed unit 110 or the feed unit 120, and is passed through the recognition unit 130, and then the object is released from the upper end of in Fig. 4 and

Fig. 5 of the feed unit 110 or the feed unit 120. Specifically, as shown in Fig. 2 and Fig. 3, there is the transport box 142 below the release portion of the release unit 110 or feed unit 120 in the z-axis direction. The object is released from the feed unit 110 or the feed unit 120 and is input to the predetermined transport box 142.

As shown in Fig. 4, the feed unit 110 consists of a pair of left and right belts parallel to the y-axis direction. The pair of belts are arranged with a gap according to the thickness of the object. The object thrown from the lower end of the feed unit 110 is transported from the lower end to the upper end of the feed unit 110 by being sandwiched between a pair of belts and rotating the left and right belts in opposite directions.

As shown in Fig. 5, the feed unit 120 is composed of a belt and a roller which is elastically deformable in the radial direction. The object thrown from the lower end of the feed unit 120 is transported from the lower end to the upper end of the feed unit 120 by being sandwiched between the belt and the roller and rotating the belt and the roller in opposite directions. In order to transport with rollers of elastically deformable material, the feed unit 120 can cope with objects that are thicker than the feed unit 110.

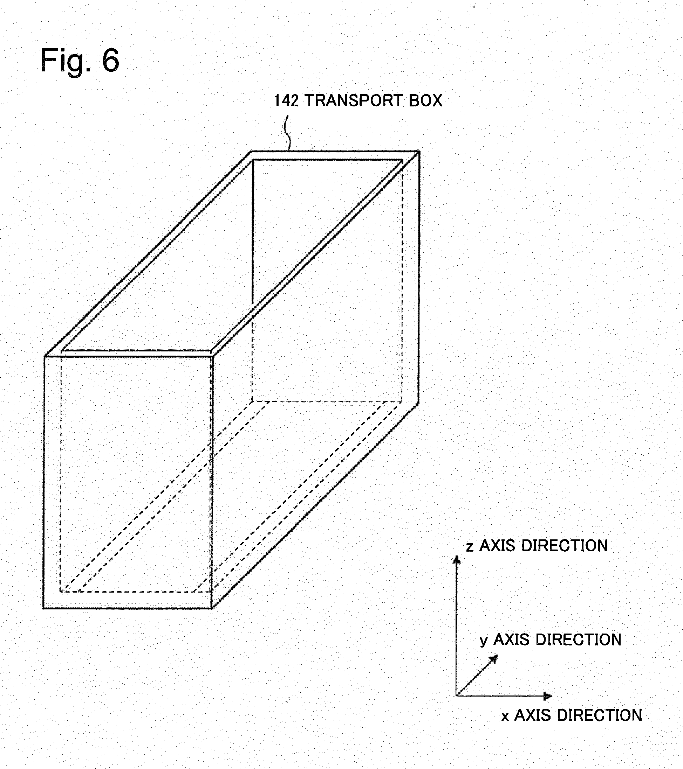

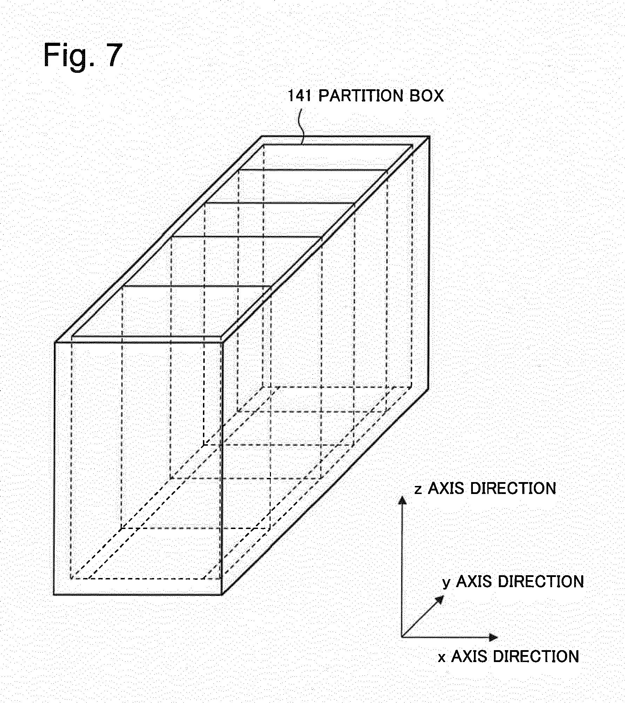

As shown in Fig. 2, the transport unit 140 includes a plurality of transport boxes 142 (Fig. 6) having a plurality of partition boxes 141 (Fig. 7) having different sizes and constituted by a hard material and a transport box 142 which is placed on an upper surface and rail 143 which constantly circulates in a predetermined passage on the horizontal plane. In addition to these, the transport unit 140 may have a coupling member in the transport box 142 that connects the transport boxes 142 to each other. The sizes of the transport boxes 142 are the same. All the transport boxes 142 of the transport unit 140 are moved clockwise or counterclockwise by the rail 143. The transport unit 140 accommodates the object fed from the feed unit 110 or 120 in the partition box 141 indicated by the control unit 100 and releases the object to the position designated by the control unit 100. In addition, the transport unit 140 acquires the configuration of the partition box 141 in the transport box 142 by an input given by a detection unit (not shown) in the transport box 142 or given by a worker to an input unit (not shown) of the automatic processing apparatus 1000 and transmits the configuration to the control unit 100.

Fig. 6 is a perspective view showing an example of the configuration of the transport box 142 of the transport unit 140 in a state where the partition box 141 is not accommodated. Fig. 7 is a perspective view showing an example of the configuration of the transport box 142 of the transport unit 140 in the state where the partition box 141 is accommodated. Internal lines that cannot be seen are indicated by broken lines.

As shown in Fig. 6, the transport box 142 has a bottom surface of the lower part in the z-axis direction having a slight length from a position in contact with the side surfaces of the transport box 142 which are opposite to each other in the x-axis direction, and a bottom surface of a central portion other than the bottom surface of the lower part is empty. The partition box 141 accommodated on this bottom surface is placed. The method of placing the partition box 141 in the transport box 142 is not limited thereto. Any method may be used. For example, the method of placing the partition box 141 in the transport box 142 may be a method such as, e.g., a hook portion provided in the upper part of the partition box 141 to be hooked on the side of the transport box 142.

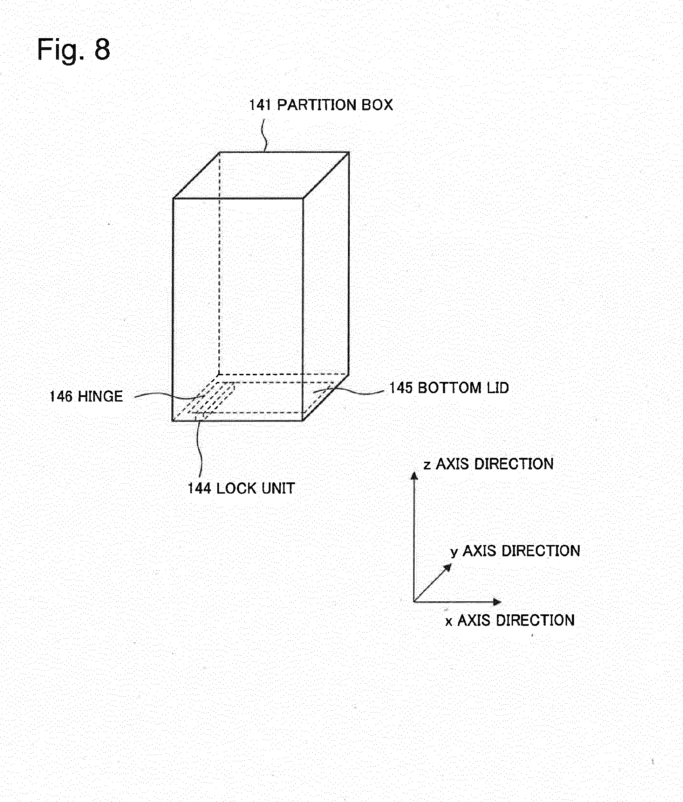

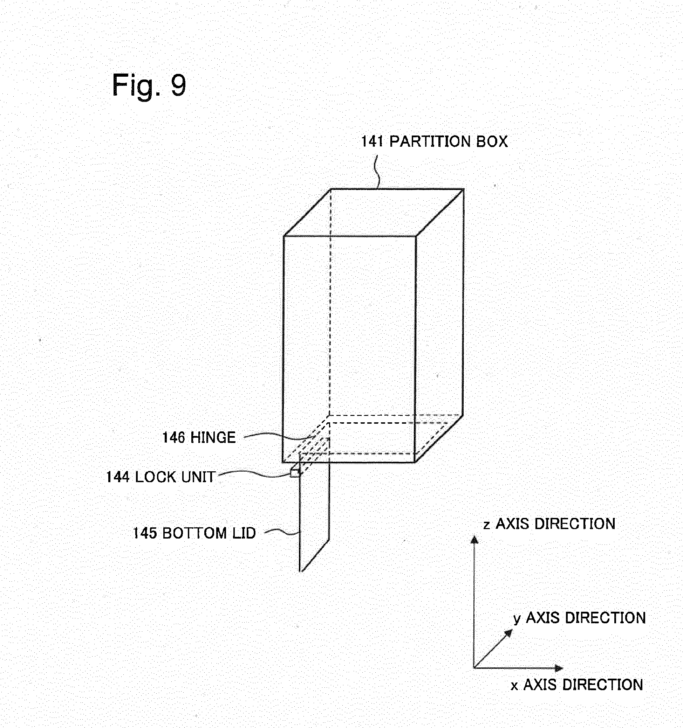

Fig. 8 is a perspective view showing an example of the configuration of the partition box 141 in a state where the bottom lid 145 of the transport unit 140 is not opened. Fig. 9 is a perspective view showing an example of the configuration of the partition box 141 in the state in which the bottom lid 145 of the transport unit 140 is open. Internal lines that cannot be seen are indicated by broken lines.

When Fig. 8 and Fig. 9 are referred to, the partition box 141 has a bottom lid 145 on the bottom surface in the z-axis direction and a lock unit 144 attached to the bottom lid 145. The partition box 141 and the bottom lid 145 are connected by the hinge 146 at the left edge in the x-axis direction in Fig. 3. The place to be connected by the hinge 146 may be any edge as long as the edge is where the partition box 141 and the bottom lid 145 are in contact. The bottom lid 145 is provided so as to be rotatable about the hinge 146. The lock unit 144 attached to the bottom lid 145 operates to inhibits rotational movement about the hinge 146 of the bottom lid 145. Specifically, the lock unit 144 may be a latch member that fixes the partition box 141 and the bottom lid 145, or may be an electromagnetic lock. In addition, when operated from the outside, the lock unit 144 cancels the inhibition of the rotational movement around the hinge 146 of the bottom lid 145. As a result, the bottom lid 145 rotates due to its own weight and hangs downward in the z-axis direction from the hinge 146. As a result, the partition box 141 is open at the bottom. At this time, if an object exists inside the partition box 141, the object falls downward in the z-axis direction. After the partition box 141 is in the open state at the bottom surface, the bottom lid 145 may be automatically closed in such a way the lock unit 144 operates. In this case, the partition box 141 may incorporate a spring in the hinge 146 or the electromagnetic lock of the lock unit 144 may operate.

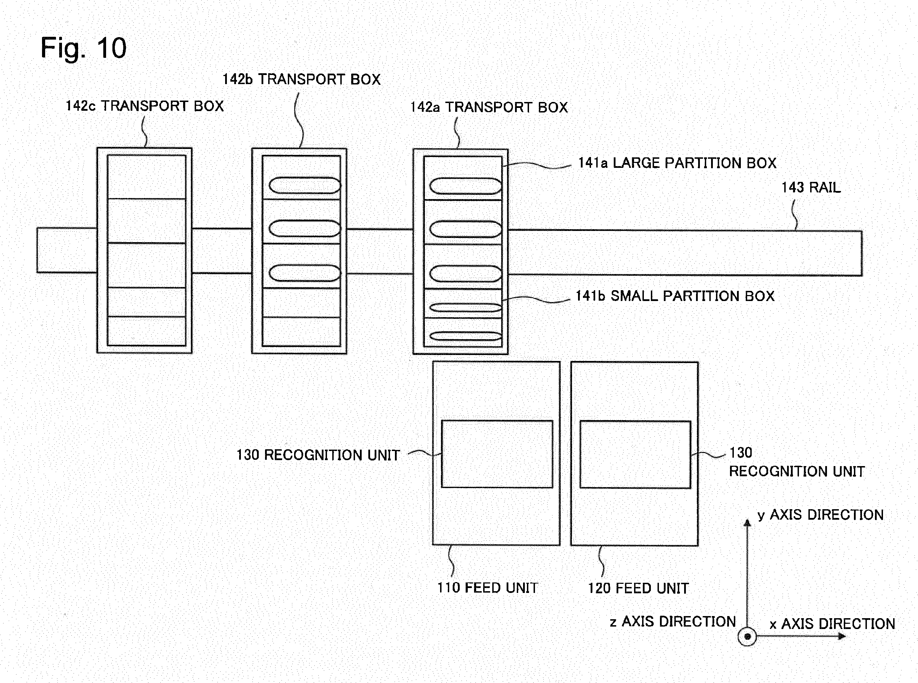

Fig. 10 is a top view showing one example of the configuration of a part (a rail 143 and transport boxes 142a, 142b, 142c) of the transport unit 140, and the configuration of the feed unit 110 and the feed unit 120. In Fig. 10, one feed unit 110 and one feed unit 120 are shown.

When Fig. 10 is referred to, the transport boxes 142a, 142b, and 142c are arbitrary three of the plurality of transport boxes 142. The transport boxes 142a, 142b, and 142c are placed on the rails 143 side by side in the x-axis direction. The transport boxes 142a, 142b, 142c have two kinds of partition boxes with different widths in the y-axis direction. Two kinds of partition boxes with different widths are assumed to be a large partition box (second partition box) 141a and a small partition box (first partition box) 141b. The large partition box 141a is a partition box 141 which is wider than the small partition box 141b.

As described above, the feed unit 110 feeds an object up to the predetermined thickness to the transport unit 140. However, the object fed by the feed unit 110 is fed to both the large partition box 141a and the small partition box 141b. On the other hand, the feed unit 120 feeds an object exceeding the predetermined thickness to the transport unit. However, the object fed by the feed unit 120 is fed to the large partition box 141a.

Here, the processing in which the control unit 100 controls feed of objects to a partition box 141 of the feed unit 110 and the feed unit 120 will be explained with reference to Fig. 10, Fig. 11, and Fig. 12.

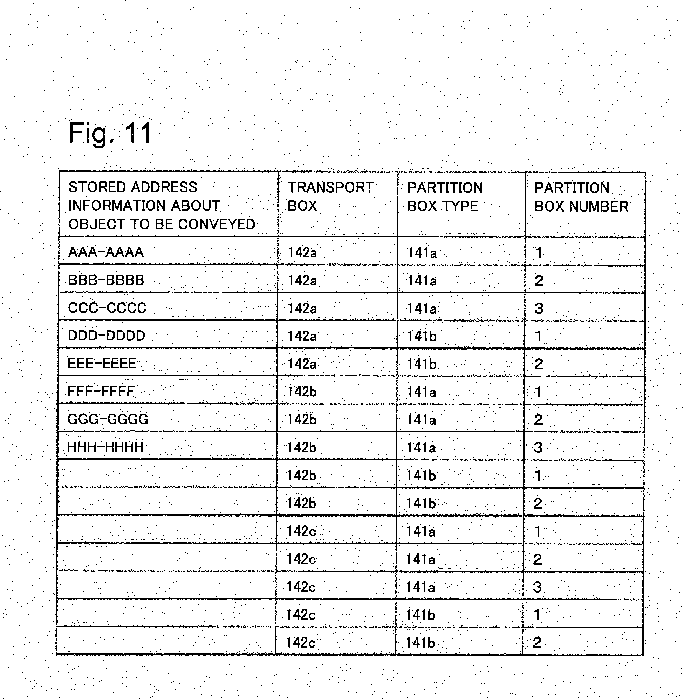

Fig. 11 is a diagram showing an example of information about accommodated object and a partition box 141 recorded in a storage unit (for example, main storage device 14) not shown in Fig. 10. As shown in Fig. 11, the address information about the accommodated object and the information about the transport box 142, the type of the partition box 141, and the number of partition boxes 141 are recorded. The number of partition boxes 141 is set to a serial number for each type in the partition box 141, but the information for identifying which partition box 141 the information is about, and even with a serial number for each transport box, a serial number of all transport boxes may be set.

The transport boxes 142a, 142b, and 142c move along the rail 143 in the counterclockwise direction within the range shown in Fig. 2. In the range shown in Fig. 10, it moves in the positive direction of the x-axis. When the feed unit 110 or the feed unit 120 feeds the object, the control unit 100 confirms the presence or absence of the content of the partition box 141 in the transport box 142a closest to the feed unit 110 or the feed unit 120. The checking method may be a method for referring to infrared rays or weight sensors in the large partition box 141a and the small partition box 141b (not shown). Alternatively, it may be referring to the presence or absence of the recording of a line about the partition box 141 and the object in the information about the accommodated object recorded in a storage unit (not shown). Here, although the feed unit 110 can feed objects to both the large partition box 141a and the small partition box 141b, the feed unit 120 can also feed the object to the large partition box 141a.

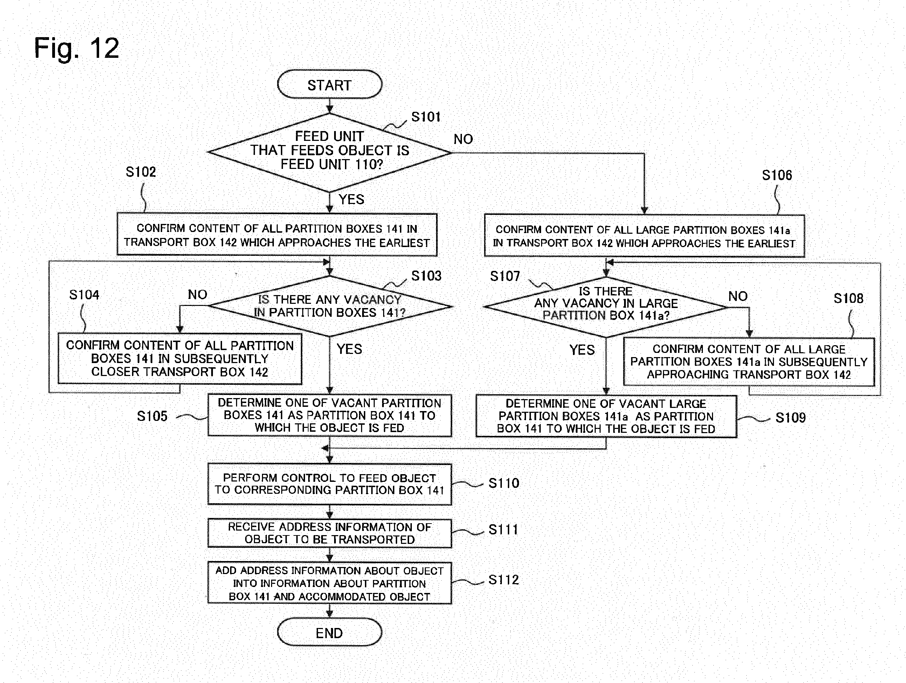

The operation of the transport unit 140, the feed unit 110 and the feed unit 120 configured as described above will be described with reference to the flowchart of Fig. 12.

Fig. 12 is a flowchart showing the outline of the operation of processing in which the control unit 100 in the automatic processing apparatus 1000 controls the feed of the object to the partition box 141 of the feed unit 110 and the feed unit 120. Incidentally, the processing according to this flowchart may be executed based on the above-mentioned program control by the CPU.

As shown in Fig. 12, first, the control unit 100 confirms whether the feed unit that feeds object is the feed unit 110 (step S101). In the case of feeding the object from the feed unit 110 (YES in step S101), the control unit 100 confirms the presence or absence of the contents of all the partition boxes 141 in the transport box 142 which approaches the earliest (step S102), and determines whether there is any vacancy (step S103). As described above, the method of checking the presence or absence of content of the partition box 141 may be a method for referring to infrared rays or a weight sensor in the large partition box 141a and the small partition box 141b, not shown. Alternatively, as described above, the method of checking the presence or absence of the content of the partition box 141 may be referring to the presence or absence of the recording of a line about the partition box 141 and the object in the information about the accommodated object recorded in a storage unit (not shown). As a result, when there is no vacant partition box 141 that can be fed (NO in step S103), the control unit 100 confirms the content of all the partition boxes 141 in the subsequently closer transport box 142 (step S104), and similarly, confirms whether or not there is vacancy (step S103). When there is a vacant partition box 141 that can be fed (YES in step S103), the control unit 100 determines one of the vacant partition boxes 141 as the partition box 141 to which the object is fed (step S105).

In the case of feeding the object from the feed unit 120 (NO in step S101), the control unit 100 confirms the content of all the large partition boxes 141a in the transport box 142 which approaches the earliest (step S106), and determines whether there is vacancy (step S107). As a result, if there is no vacant large partition box 141a that can be fed (NO in step S107), the control unit 100 confirms the content of all the large partition boxes 141a in the subsequently approaching transport box 142 (step S108), and similarly, confirms whether or not there is vacancy (step S107). When there is a vacant large partition box 141a that can be fed (YES in step S107), the control unit 100 determines one of the vacant large partition boxes 141a as the partition box 141 to which the object is fed (step S109).

Next, the control unit 100 controls the feed unit 110 or the feed unit 120 to feed the object to the corresponding partition box 141 (step S110).

Subsequently, the control unit 100 receives the address information of the object recognized by the recognition unit 130 through which the object passed during step S110 (step Sill).

Subsequently, the control unit 100 stores the address information about the received object into the line of the partition box 141 determined in determined in step S105 or step S109, of the information about the partition box 141 and the accommodated object recorded in the storage unit, not shown in Fig. 10 (step S112).

Thus, the control unit 100 ends the processing of feeding the object from the feed unit 110 and the feed unit 120 to the partition box 141.

More specifically in the example of Fig. 10, when the feed unit 110 feeds an object, the control unit 100 confirms the contents of all the partition boxes 141 in the transport box 142a which approaches the earliest. However, since objects are accommodated in all the partition boxes 141 in the transport box 142a, the control unit 100 confirms the content of all the partition boxes 141 in the subsequently closer transport box 142b. Since there is a vacancy in the partition box 141 in the transport box 142b, the control unit 100 determines one of the partition boxes 141 of the vacant partition boxes 141 (small partition box 141b) in the transport box 142b as the partition box 141 to which the object is fed. The partition box 141 to be selected may be either one. The control unit 100 controls the feed unit 110 to feed the object to the corresponding partition box, and at this time, receives the address information about the object recognized by the recognition unit 130. The control unit 100 adds the address information about the object to the line of the corresponding partition box 141 of the information about the partition box 141 and accommodated object in Fig. 11.

When the feed unit 120 feeds an object, the control unit 100 confirms the content of all the large partition boxes 141a in the transport box 142a which approaches the earliest. However, since objects are accommodated in all the large partition boxes 141a in the transport box 142a, the control unit 100 confirms the content of all the large partition boxes 141a in the transport box 142b approaching subsequently. However, since objects are also accommodated in all the large partition boxes 141a in the transport box 142b, the control unit 100 confirms the content of all the large partition boxes 141a in the transport box 142c approaching subsequently. Since the large partition box 141a in the transport box 142c has vacancy, the control unit 100 determines one of the large partition boxes 141a among the vacant large partition boxes 141a in the transport box 142c as the partition box 141 to which the object is fed. The large partition box 141a to be selected may be either one. The control unit 100 controls the feed unit 120 to feed the object to the corresponding partition box 141, and at this time, receives the address information about the object recognized by the recognition unit 130. The control unit 100 adds the address information about the object to the line of the relevant large partition box 141a of the information about the partition box 141 and the accommodated object of Fig. 11.

The feed method from the feed unit 110 or the feed unit 120 to an arbitrary partition box 141 will not be described in detail, but the release surface of the feed unit 110 or the feed unit 120 is controlled by the control unit 100 so as to be able to reliably carry out feed of the object to the opening unit on the upper surface of an arbitrary partition box 141. For example, the control unit 100 controls the feed unit 110 or the feed unit 120 to move in in the y-axis direction in such a way the release surface of the feed unit 110 or the feed unit 120 is located above the upper surface of an arbitrary partition box 141 and the released object falls into the arbitrary partition box 141.

Although the transport boxes 142a, 142b, 142c have been described as having two kinds of partition boxes 141 having different widths in the y axis direction, the transport boxes 142a, 142b, 142c may have a structure in which a plurality of partition boxes 141 are arranged in the x axis direction instead of the y axis direction.

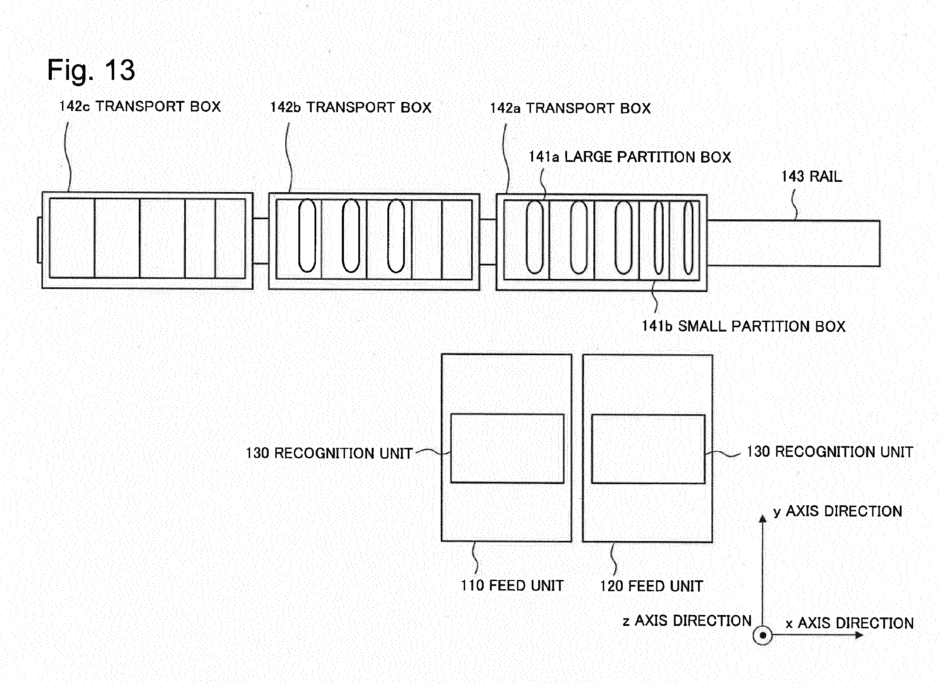

Fig. 13 is a top view showing a part of the transport unit 140 according to the present example embodiment and another example of a configuration of the feed unit 110 and the feed unit 120. In this case, since the partition boxes 141 are arranged at a fixed distance in the y-axis direction, the release unit of the feed unit 110 or the feed unit 120 is not required to be adjusted by the control unit 100 in the y direction so as to be positioned on the upper surface of an arbitrary partition box 141 every time the feed is performed. Further, the direction of the object when feeding the object to an arbitrary partition box 141 matches the shape of the opening unit of the partition box 141, in such a way the feed unit 110 or the feed unit 120 performs adjust in such a way the object is fed to an arbitrary partition box 141 without any problem. In the case of the configuration of the transport unit 140 shown in Fig. 13, the transport boxes 142a, 142b, 142c, the large partition box 141a, and the small partition box 141b may be provided with an opening unit, not on the top surface at the upper side in the z-axis direction, but on a surface opposite to the feed units 110, 120, that is, the side surface on the lower side in the y-axis direction in Fig. 13. In this case, the feed units 110 and 120 are not arranged above the transport unit 140 in the z-axis direction as shown in Fig. 3, but are arranged at the same height as the transport box 142 of the transport unit 140.

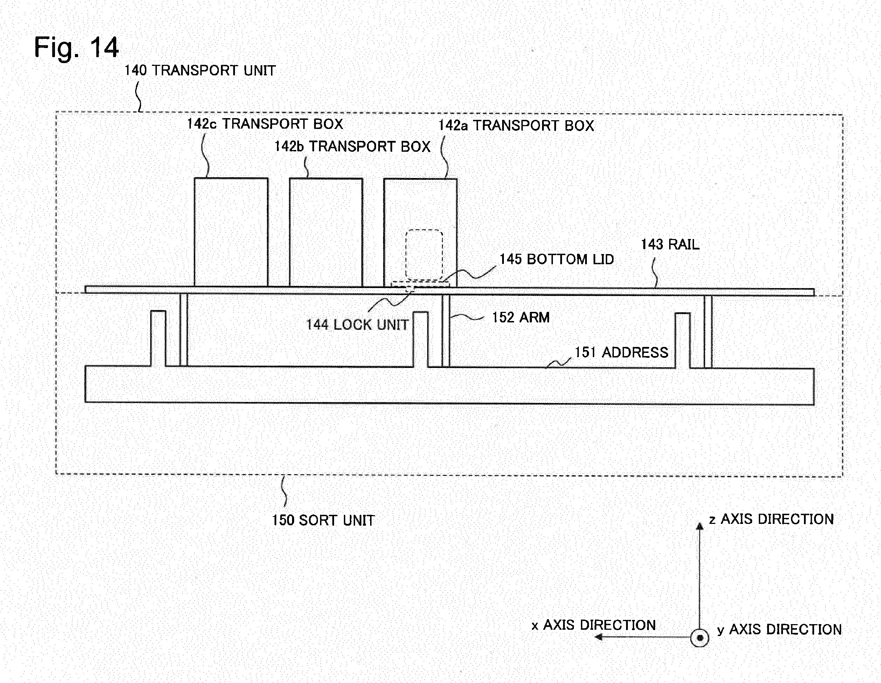

As shown in Fig. 3 or Fig. 14 to be described later, the sort unit 150 includes a plurality of addresses 151 provided below the transport unit 140 in the z-axis direction and separated by a wall at equal width and an arm 152 at each of address 151.

The address 151 accumulates sorted objects based on preset sort rules and address information of the object. The preset sort rule is a rule for defining, for example, an object of which address information is to be accumulated in which address 151.

The arm 152 is a member extending in the z-axis direction to the height of the bottom surface of the transport box 142. The arm 152 opens the bottom lid 145 of the partition box 141 by operating the lock unit 144 of the bottom lid 145 of the partition box 141 specified based on the control of the control unit 100. The arm 152 can move in the x-axis direction, the y-axis direction, or both according to need by control of the control unit 100. Further, the arm 152 may extend and contract in the z-axis direction as necessary.

Fig. 14 is a side view showing an example of the configuration of the transport unit 140 and the sort unit 150 according to the present example embodiment. When Fig. 14 is referred to, the transport boxes 142a, 142b, 142c of the transport unit 140 are placed on the rail 143 and move horizontally along the track of the rail. However, unlike Fig. 10 and Fig. 13, the transport boxes 142a, 142b, 142c move along the rail 143 in the negative direction in the x-axis.

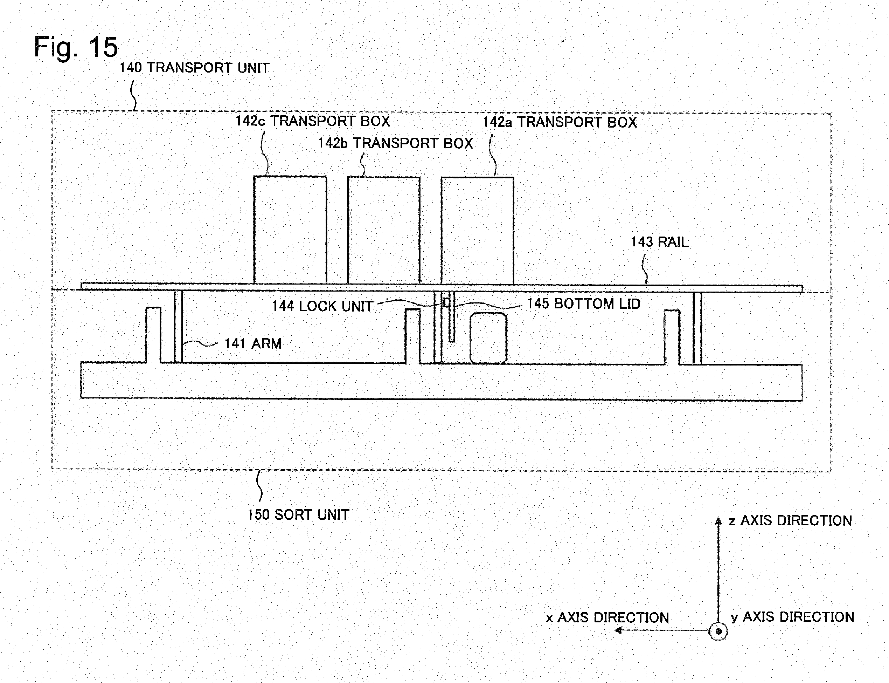

Fig. 15 is a side view showing another example of the configuration of the transport unit 140 and the sort unit 150. Fig. 15 is a figure after the bottom lid 145 of the partition box 141 of the transport box 142a is opened, and the accommodated object was released to the location of the sort unit 150 determined based on the preset sort rule and the address information (first information) of the object.

When Fig. 14 and Fig. 15 are referred to, the transport of the object from the transport unit 140 to the sort unit 150 will be explained. First, the control unit 100 refers to the partition box 141 recorded in the storage unit (not shown), the information about the accommodated object (Fig. 11), and the sort rule corresponding to the address information of the object, and determines the address 151 of the sort unit 150 which releases the accommodated object to the desired partition box 141 of the transport box 142a. For example, when the address indicated by the address information BBB-BBBB in Fig. 11 is Tokyo, the release destination of object accommodated in the transport box 142a, the large partition box 141a, and the partition box number 2 is determined to be the address of the segregation for Tokyo.

Subsequently, until the transport box 142 reaches the upper z-axis direction of the address 151 determined by the control unit 100, the control unit 100 performs control to move the transport box 142 in such a way the lock unit 144 of the bottom lid 145 of the corresponding partition box 141 in the transport box 142 can be operated. Specifically, the control unit 100 controls the position of the arm 152 of the address 151 releasing the object in the x-axis direction and the y-axis direction.

Next, when the transport box 142 reaches the upper side in the z-axis direction of the address 151 determined by the control unit 100, the control unit 100 controls the arm 152 to operate the lock unit 144, and opens the bottom lid 145 of the partition box 141. As a result, the accommodated object inside the partition box 141 drops downward in the z-axis direction as shown in Fig. 15 and is accommodated at the address 151 determined by the control unit 100.

Thus, the automatic processing apparatus 1000 ends the transport operation of the object from the transport unit 140 to the sort unit 150.

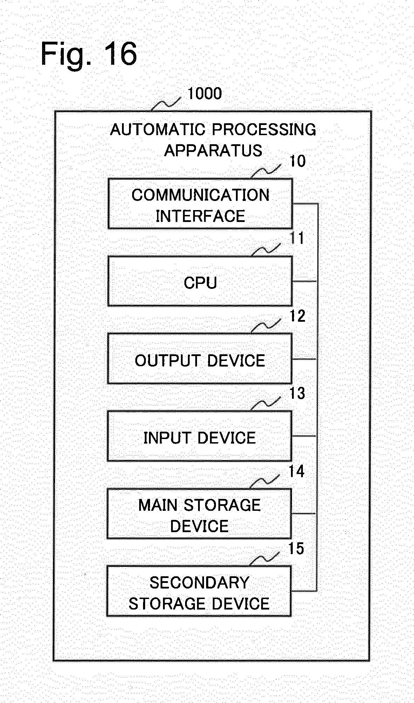

Fig. 16 shows an example of the hardware configuration when the automatic processing apparatus 1000 is realized by a computer apparatus. As shown in Fig. 16, the automatic processing apparatus 1000 includes a communication interface 10, a CPU (Central Processing Unit) 11, an output device 12, an input device 13, a main storage device 14, and a secondary storage device 15.

The communication interface 10 constitutes an input and output interface for communication between the control unit 100 and the feed units 110, 120, the recognition unit 130, the transport unit 140, and the sort unit 150. The communication interface 10 also includes an interface for connection control with a network, not shown, connected to the automatic processing apparatus 1000.

The CPU 11 operates the operating system to control the entire automatic processing apparatus 1000 according to the first example embodiment of the present invention. Further, the CPU 11 reads a program or data from the secondary storage device 15 to the main storage device 14, for example. Specifically, the CPU 11 of the automatic processing apparatus 1000 operates as the control unit 100 and executes various kinds of processing based on program control. The number of CPU 11 of the automatic processing apparatus 1000 is not limited to one, and two or more CPUs 11 may be provided.

The output device 12 is realized by, for example, a display and a display device, and is used for checking the output.

The input device 13 is realized by, for example, a mouse, a keyboard, a built-in key button or the like, and is used for an input operation. The input device 13 is not limited to a mouse, a keyboard, a built-in key button, but may be a touch panel, for example.

The main storage device 14 is a work memory based on the control of the CPU 11.

The secondary storage device 15 is, for example, an optical disk, a flexible disk, a magneto optical disk, an external hard disk, a semiconductor memory or the like, and records the computer program in a computer readable manner. The secondary storage device 15 temporarily stores or non-transiently stores the computer program to be executed by the automatic processing apparatus 1000. Therefore, the CPU 11 may read the computer program recorded in the secondary storage device 15 and operate as the control unit 100 according to the program.

Further, the computer program may be downloaded from an external computer (not shown) connected to the communication network.

In the block diagram (Fig. 1) used in the description of the first example embodiment, the block of the functional unit is shown. These functional blocks are not limited to the computer device shown in Fig. 16, and each unit may be realized by hardware circuit. However, the realization means of each unit of the automatic processing apparatus 1000 is not particularly limited. That is, the automatic processing apparatus 1000 may be realized by one physically coupled device, or two or more physically separated devices may be connected via a wire or wirelessly connected, in such a way the automatic processing apparatus 1000 may be realized by these plural devices.

The automatic processing apparatus 1000 according to the present example described above can transport an object up to the predetermined thickness and an object exceeding the predetermined thickness without requiring adjustment of the transport box or complicated control.

The reason is because the automatic processing apparatus 1000 includes the following configuration.

The automatic processing apparatus 1000 includes at least two kinds of feed units including the feed unit 110 for feeding an object up to the predetermined thickness to the transport unit 140 and the feed unit 120 for feeding an object exceeding the predetermined thickness to the transport unit 140. The transport unit 140 of the automatic processing apparatus 1000 has a plurality of transport boxes 142 of the same size including a partition box 141 (141a, 141b) as a partition member partitioning the inside into a plurality of accommodation spaces. A plurality of transport boxes 142 are arranged on a transport track. The width of the accommodation space partitioned by the partition box is at least one of a first width and a second width wider than the first width. By shifting the plurality of transport boxes 142 along the transport track, the transport unit 140 moves a plurality of transport boxes 142 along a transport track, in such a way the object fed from the feed unit 110 or 120 is accommodated in one of the accommodation space (large partition box 141a) of the first width and the accommodation space (small partition box 141b) of the second width. In this case, the control unit 100 of the automatic processing apparatus 1000 determines which of the accommodation space of the first width and the accommodation space of the second width the object fed from the feed units 110, 120 is to be accommodated, based on the feed unit 110, 120 which is the feed source of the object. Further, the control unit 100 controls the feed units 110, 120 and the transport unit 140 so as to accommodate the object in the determined accommodation space.

As described above, in the automatic processing apparatus 1000, from two or more types of feed units corresponding to the thickness of the transported part, objects are accommodated in the accommodation spaces having different width in a plurality of transport boxes of the same size on the transport track and therefore, the object can be transported without requiring adjustment of the transport box and complicated control.

Specifically, first, the transport unit 140 includes a plurality of transport boxes 142 of the same size including a small partition box 141b accommodating objects up to a predetermined thickness and a large partition box 141a accommodating objects exceeding the predetermined thickness. Secondly, when detecting the object with the feed unit 110 or the feed unit 120, the control unit 100 determines whether the detected feed unit is the feed unit 110 for feeding an object up to a predetermined thickness to the transport unit or the feed unit 120 for feeding an object exceeding the predetermined thickness to the transport unit 140. Thirdly, when feeding the object from the feed unit 110, the control unit 100 searches for an empty partition box 141 that can be fed from among all the partition boxes 141, and controls the feed unit 110 to accommodate the object in the corresponding partition box 141 if it exists. Fourthly, when feeding the object from the feed unit 120, the control unit 100 searches for a vacant large partition box 141a which can feed from among all of the large partition box 141a accommodating objects exceeding the predetermined thickness. When there is a vacant large partition box 141a, the feed unit 120 is controlled to accommodate the object in the large partition box 141a. In this way, since the automatic processing apparatus 1000 controls the transport box 142 of the same size, there is no need to change the control of the transport box 142 (van in PTL 2) such as circulation cycle and position adjustment. In addition, the automatic processing apparatus 1000 uses the feed unit 110 and the feed unit 120 together, and the transport unit 140 also uses the large partition box 141a and the small partition box 141b together in such a way the object of the predetermined thickness and the object exceeding the predetermined thickness are exceeded can be transported in a mixed manner. Therefore, the automatic processing apparatus 1000 has the effect in that the object of the predetermined thickness and the object exceeding the predetermined thickness can be transported in a mixed manner without changing the control of the transport box without causing interference between the objects.

### [Modification]

Subsequently, an alternative will be explained.

Rather than a plurality of partition boxes 141 having different sizes configured with a hard material in the first alternative, the transport box 142 of the transport unit 140 may have a plurality of partition plates that are configured with rigid materials and may change the distance of the gap. In this case, since the box shape is formed by the two adjacent partition plates and the side walls of the opposite side faces of the transport box 142, the partition plate provides the same function as the partition box 141 in the first alternative. In this case as well, the same effect can be obtained. However, in order to obtain the release function of the object from the transport unit 140 to the sort unit 150 according to the first alternative, the transport box 142 may further include a release mechanism corresponding to the lock unit 144, the bottom lid 145, and the hinge 146 according to the first alternative.

Subsequently, the second alternative will be described in detail with reference to the drawings.

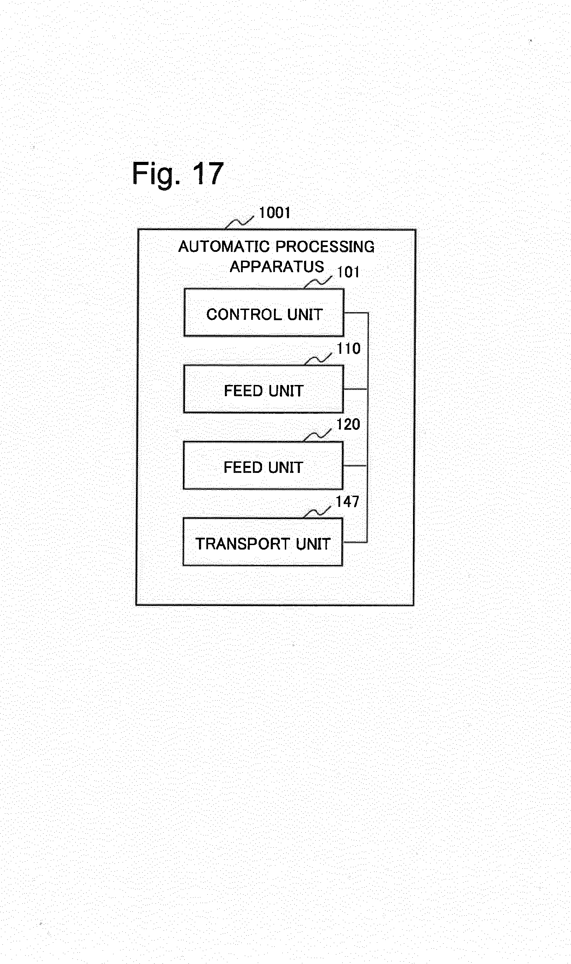

Fig. 17 is a block diagram showing a configuration of an automatic processing apparatus 1001 according to the second alternative.

When Fig. 17 is referred to, the automatic processing apparatus 1001 has a control unit 101 instead of the control unit 100, and has a transport unit 147 instead of the transport unit 140, as compared with the first alternative. The feed unit 110 and the feed unit 120 are the same. As previously, the control unit, feed unit, and transport unit are also generally referred to as control means, feed means, and transport means, respectively.

The transport unit 147 has a plurality of transport boxes of the same size including a partition member partitioning the inside into a plurality of accommodation spaces. A plurality of transport boxes are placed on the transport track. The width of the accommodation space partitioned by the partition member is at least one of a first width and a second width wider than the first width. By moving a plurality of transport boxes along the line, the transport unit 147 accommodates the object fed from the feed unit 110 or the feed unit 120 into one of the accommodation space of the first width and the accommodation space of the second width. The accommodation space of the first width corresponds to the small partition box 141 b.

Similarly, the accommodation space of the second width corresponds to the large partition box 141a.

Based on the feed unit 110 or the feed unit 120 which is the feed source of the object, the control unit 101 accommodates an object fed from the feed unit 110 or the feed unit 120 into either the accommodation space of the first width or the accommodation space of the second width. Further, the control unit 101 controls the feed unit 110, the feed unit 120, and the transport unit 147 so as to accommodate in the accommodation space determined

The operation of determining the accommodation space (corresponding to the partition box 141 according to the first alternative) of the transport unit accommodating the object of the automatic processing apparatus 1001 and controlling to accommodate the object is the same as the operation shown in steps S101 to S110 in the flowchart as shown in Fig. 12.

More specifically, the automatic processing apparatus 1001 according to there above can transport an object up to the predetermined thickness and an object exceeding the predetermined thickness without requiring adjustment of the transport box or complicated control.

The reason for this is that the automatic processing apparatus 1001 accommodates objects from two or more types of feed units 110, 120 corresponding to the thicknesses of the transported units into different accommodation spaces with different width in the transport box of the same size on the transport track. For this reason, the automatic processing apparatus 1001 can be transported without requiring adjustment of the transport box or complicated control.

### [Reference signs List]

- 10: communication interface
- 11: CPU
- 12: output device
- 13: input device
- 14: main storage device
- 15: secondary storage device
- 100, 101: control unit
- 110, 120: feed unit
- 130: recognition unit
- 140, 147: transport unit
- 141: partition box
- 141a: large partition box
- 141b: small partition box
- 142, 142a, 142b, 142c: transport box
- 143: rail
- 144: lock unit
- 145: bottom lid
- 146: hinge
- 150: sort unit
- 151: address
- 152: arm
- 1000, 1001: automatic processing apparatus

## Claims

1. An automatic processing apparatus (1000) comprising:
at least two types of feed means including a first feed means (110) for feeding an object up to a predetermined thickness to transport means (140) and a second feed means (120) for feeding an object exceeding the predetermined thickness to the transport means (140);
the transport means (140) including a plurality of transport boxes of a similar size, the plurality of transport boxes (142, 142a, 142b, 142c) respectively including a partition member partitioning an inner space into a plurality of accommodation spaces (141), the plurality of transport boxes being placed on a transport track, and the accommodation spaces respectively partitioned by the partition member having a width of at least one of a first width and a second width wider than the first width, the transport means (140) moving the plurality of transport boxes along the transport track and accommodating the object fed from the feed means to one of the accommodation space (141) of the first width and the accommodation space of the second width; and
control means (100) determining for accommodating the object fed from the feed means in the accommodation spaces (141) of the first width and the accommodation spaces (141) of the second width, based on the feed means which is a feed source of the object, the control means (100) controlling the feed means and the transport means (140) so as to accommodate the object in the determined accommodation space (141).

2. The automatic processing apparatus (1000) according to claim 1, wherein the accommodation space (141) of the first width of the transport means (142) is constituted by a first partition box (141a), and the accommodation space of the second width thereof is constituted by a second partition box (141b).

3. The automatic processing apparatus (1000) according to claim 2, further comprising:
recognition means (!30) provided in the two types of feed means (110, 120) to recognize and acquire first information described on a surface of the object received; and
sort means (150) including a plurality of addresses partitioned by walls with an equal width,
wherein the control means (100) determines the first partition box (141a) or the second partition box (141b) into which the object is released and the address of the sort means (150) to control release, based on information about the first partition box (141a) or the second partition box (141b) accommodating the object and first information received from the recognition means.

4. The automatic processing apparatus according to claim 1, wherein the partition member partitioning the inside of the transport means into the plurality of accommodation spaces is constituted by a partition plate.

5. An automatic processing method of an automatic processing apparatus (1000), includes,
by a first feed means (110) feeding an object up to a predetermined thickness to transport means,
and by a second feed means (120), feeding an object exceeding the predetermined thickness to the transport mean;
using transport means (140), which includes a plurality of transport boxes (142, 142a, 142b, 142c) of a similar size, respectively including a partition member partitioning an inner space into a plurality of accommodation spaces (141) and the plurality of transport boxes are placed on a transport track and the accommodation spaces, respectively partitioned by the partition member has a width of at least one of a first width and a second width wider than the first width,
moving the plurality of transport boxes (142, 142a, 142b, 142c) along the transport track to accommodate the object fed from the feed means to one of the accommodation space of the first width and the accommodation space of the second width,
by control means (100), determining for accommodating the object fed from the feed means (110, 120) in the accommodation spaces of the first width (141a) and the accomodation spaces of the second width (141b), based on the feed means which is a feed source of the object and to control the feed means and the transport means (140) so as to accommodate the object in the determined accommodation space.

6. The automatic processing method of the automatic processing apparatus according to claim 5, wherein the accommodation space of the first width of the transport means is constituted by a first partition box (141a), and the accommodation space of the second width thereof is constituted by a second partition box (141b).

7. The automatic processing method of the automatic processing apparatus according to claim 6, wherein the automatic processing apparatus (1000) further includes:
recognition means (130) provided in the two types of feed means (110, 120) to recognize and acquire first information described on a surface of the object received; and
sort means (150) including a plurality of addresses partitioned by walls with an equal width,
wherein the control means (100) determines the first partition box (141a) or the second partition box into which the object is released and the address of the sort means to control release, based on information about the first partition box or the second partition box (141b) accommodating the object and first information received from the recognition means (130).

8. The automatic processing method of the automatic processing apparatus (1000) according to claim 5, wherein the partition member partitioning the inside of the transport means (140) into the plurality of accommodation spaces is constituted by a partition plate.

9. A computer program comprising computer executable instructions, which when being executed on a computer cause said computer to act as the control means (100) of an automatic processing apparatus (1000), said automatic processing apparatus comprising:
at least two types of feed means (110, 120) including a first feed means (110) for feeding an object up to a predetermined thickness to transport means and a second feed means (120) for feeding an object exceeding the predetermined thickness to the transport means;
the transport means (140) including a plurality of transport boxes (142, 142a, 142b, 142c) of a similar size, the plurality of transport boxes respectively including a partition member partitioning an inner space into a plurality of accommodation spaces (141), the plurality of transport boxes being placed on a transport track (143), and the accommodation spaces respectively partitioned by the partition member having a width of at least one of a first width and a second width wider than the first width, the transport means (140) moving the plurality of transport boxes along the transport track (143) and accommodating the object fed from the feed means to one of the accommodation space of the first width (141a) and the accommodation space of the second width (141b), and
said computer executable instructions when being executed on said computer enable said computer acting as said control means (100) to
determine for accommodating the object fed from the feed means in the accommodation spaces of the first width (141a) and the accommodation spaces of the second width (141b), based on the feed means which is a feed source of the object, the control means (100) controlling the feed means and the transport means (140) so as to accommodate the object in the determined accommodation space, the computer program thereby enabling said automatic processing apparatus (1000) to perform a method according to claim 5.

10. The computer program according to claim 9, further comprising instructions, which when being executed by said computer enable said computer to act as a control means (100) of an automatic processing apparatus in accordance with one of claims 2 to 4, the computer program thereby enabling said automatic processing apparatus to perform a method according to one of claims 6 to 8.

## Patentansprüche

1. Automatische Verarbeitungsvorrichtung (1000), die Folgendes umfasst:
mindestens zwei Arten von Zuführungseinrichtungen, die eine erste Zuführungseinrichtung (110) zum Zuführen eines Gegenstands bis zu einer vorbestimmten Dicke zu einer Transporteinrichtung (140) und eine zweite Zuführungseinrichtung (120) zum Zuführen eines Gegenstands, der die vorbestimmte Dicke überschreitet, zu der Transporteinrichtung (140) umfassen; wobei
die Transporteinrichtung (140) eine Vielzahl von Transportboxen ähnlicher Größe enthält, wobei die Vielzahl von Transportboxen (142, 142a, 142b, 142c) jeweils ein Unterteilungselement enthält, das einen Innenraum in eine Vielzahl von Aufnahmeräumen (141) unterteilt, wobei die Vielzahl von Transportboxen auf einer Transportbahn angeordnet ist, und die Aufnahmeräume jeweils durch das Trennelement unterteilt sind, das eine Breite von mindestens einer von einer ersten Breite und einer zweiten Breite, die breiter als die erste Breite ist, aufweist, wobei die Transporteinrichtung (140) die Vielzahl von Transportboxen entlang der Transportbahn bewegt und den von der Zuführeinrichtung zugeführten Gegenstand in einem der Aufnahmeräume (141) der ersten Breite und dem Aufnahmeraum der zweiten Breite aufnimmt; und
eine Steuereinrichtung (100), die auf der Grundlage der Zuführungseinrichtung, die eine Zuführungsquelle des Objekts ist, bestimmt, dass das von der Zuführungseinrichtung zugeführte Objekt in den Unterbringungsräumen (141) der ersten Breite und den Unterbringungsräumen (141) der zweiten Breite untergebracht wird, wobei die Steuereinrichtung (100) die Zuführungseinrichtung und die Transporteinrichtung (140) so steuert, dass das Objekt in dem bestimmten Unterbringungsraum (141) untergebracht wird.

2. Automatische Verarbeitungsvorrichtung (1000) nach Anspruch 1, wobei der Aufnahmeraum (141) der ersten Breite der Transporteinrichtung (142) durch ein erstes Trennfach (141a) gebildet wird und der Aufnahmeraum der zweiten Breite davon durch ein zweites Trennfach (141b) gebildet wird.

3. Automatische Verarbeitungsvorrichtung (1000) nach Anspruch 2, ferner umfassend:
Erkennungsmittel (!30), die in den beiden Arten von Zuführungseinrichtungen (110, 120) vorgesehen sind, um erste Informationen zu erkennen und zu erfassen, die auf einer Oberfläche des aufgenommenen Objekts beschrieben sind; und
eine Sortiereinrichtung (150) mit einer Vielzahl von Adressen, die durch Wände mit gleicher Breite unterteilt sind,
wobei die Steuereinrichtung (100) das erste Trennfach (141a) oder das zweite Trennfach (141b), in das das Objekt freigegeben wird, und die Adresse der Sortiereinrichtung (150) zur Steuerung der Freigabe auf der Grundlage von Informationen über das erste Trennfach (141a) oder das zweite Trennfach (141b), das das Objekt aufnimmt, und der von der Erkennungseinrichtung empfangenen ersten Informationen bestimmt.

4. Automatische Verarbeitungsvorrichtung nach Anspruch 1, wobei das Trennelement, das das Innere der Transporteinrichtung in die Vielzahl von Unterbringungsräumen unterteilt, durch eine Trennplatte gebildet wird.

5. Ein automatisches Verarbeitungsverfahren einer automatischen Verarbeitungsvorrichtung (1000), das Folgendes umfasst,
das Zuführen eines Gegenstandes bis zu einer vorbestimmten Dicke zu einer Transporteinrichtung durch eine erste Zuführeinrichtung (110), und durch eine zweite Zuführeinrichtung (120), Zuführen eines Gegenstandes, der die vorbestimmte Dicke überschreitet, zu der Transporteinrichtung;
Verwenden einer Transporteinrichtung (140), die eine Vielzahl von Transportboxen (142, 142a, 142b, 142c) ähnlicher Größe aufweist, die jeweils ein Unterteilungselement enthalten, das einen Innenraum in eine Vielzahl von Aufnahmeräumen (141) unterteilt, und wobei die Vielzahl von Transportboxen auf einer Transportbahn angeordnet ist und die Aufnahmeräume, die jeweils durch das Unterteilungselement unterteilt sind, eine Breite von mindestens einer von einer ersten Breite und einer zweiten Breite haben, die breiter als die erste Breite ist,
Bewegen der Vielzahl von Transportboxen (142, 142a, 142b, 142c) entlang der Transportbahn, um den von der Zuführeinrichtung zugeführten Gegenstand in einem der Aufnahmeräume mit der ersten Breite und dem Aufnahmeraum mit der zweiten Breite unterzubringen,
durch eine Steuereinrichtung (100), Bestimmen zum Unterbringen des von der Zuführeinrichtung (110, 120) zugeführten Gegenstands in den Aufnahmeräumen der ersten Breite (141a) und den Aufnahmeräumen der zweiten Breite (141b), basierend auf der Zuführeinrichtung, die eine Zuführquelle des Gegenstands ist, und zum Steuern der Zuführeinrichtung und der Transporteinrichtung (140), um den Gegenstand in dem bestimmten Aufnahmeraum unterzubringen.

6. Automatisches Verarbeitungsverfahren der automatischen Verarbeitungsvorrichtung nach Anspruch 5, wobei der Aufnahmeraum der ersten Breite der Transporteinrichtung durch ein erstes Trennfach (141a) gebildet wird und der Aufnahmeraum der zweiten Breite davon durch ein zweites Trennfach (141b) gebildet wird.

7. Automatisches Verarbeitungsverfahren der automatischen Verarbeitungsvorrichtung nach Anspruch 6, wobei die automatische Verarbeitungsvorrichtung (1000) ferner umfasst:
Erkennungsmittel (130), die in den beiden Arten von Zuführungsmitteln (110, 120) vorgesehen sind, um erste Informationen zu erkennen und zu erfassen, die auf einer Oberfläche des aufgenommenen Objekts beschrieben sind; und
eine Sortiereinrichtung (150) mit einer Vielzahl von Adressen, die durch Wände mit gleicher Breite unterteilt sind,
wobei die Steuereinrichtung (100) das erste Unterteilungsfach (141a) oder das zweite Unterteilungsfach, in das das Objekt freigegeben wird, und die Adresse der Sortiereinrichtung zur Steuerung der Freigabe auf der Grundlage von Informationen über das erste Unterteilungsfach oder das zweite Unterteilungsfach (141b), das das Objekt aufnimmt, und von der Erkennungseinrichtung (130) empfangenen ersten Informationen bestimmt.

8. Automatisches Verarbeitungsverfahren der automatischen Verarbeitungsvorrichtung (1000) nach Anspruch 5, wobei das Trennelement, das das Innere der Transporteinrichtung (140) in die Mehrzahl von Unterbringungsräumen unterteilt, durch eine Trennplatte gebildet wird.

9. Computerprogramm mit computerausführbaren Befehlen, die, wenn sie auf einem Computer ausgeführt werden, den Computer veranlassen, als Steuermittel (100) einer automatischen Verarbeitungsvorrichtung (1000) zu fungieren, wobei die automatische Verarbeitungsvorrichtung umfasst:
mindestens zwei Arten von Zuführungsmitteln (110, 120) einschließlich eines ersten Zuführungsmittels (110) zum Zuführen eines Objekts bis zu einer vorbestimmten Dicke zu Transportmitteln und eines zweiten Zuführungsmittels (120) zum Zuführen eines Objekts, das die vorbestimmte Dicke überschreitet, zu den Transportmitteln;
die Transporteinrichtung (140) eine Vielzahl von Transportboxen (142, 142a, 142b, 142c) ähnlicher Größe enthält, wobei die Vielzahl von Transportboxen jeweils ein Trennelement enthält, das einen Innenraum in eine Vielzahl von Aufnahmeräumen (141) unterteilt, wobei die Vielzahl von Transportboxen auf einer Transportbahn (143) angeordnet ist, und die Aufnahmeräume jeweils durch das Trennelement unterteilt sind, das eine Breite von mindestens einer von einer ersten Breite und einer zweiten Breite, die breiter als die erste Breite ist, aufweist, wobei die Transporteinrichtung (140) die Vielzahl von Transportboxen entlang der Transportbahn (143) bewegt und das von der Zuführeinrichtung zugeführte Objekt in einem der Aufnahmeräume der ersten Breite (141a) und dem Aufnahmeraum der zweiten Breite (141b) aufnimmt, und
die computerausführbaren Anweisungen, wenn sie auf dem Computer ausgeführt werden, den Computer, der als das Steuermittel (100) wirkt, befähigen zum Bestimmen zum Unterbringen des von der Zuführeinrichtung (110, 120) zugeführten Gegenstands in den Aufnahmeräumen der ersten Breite (141a) und den Aufnahmeräumen der zweiten Breite (141b), basierend auf der Zuführeinrichtung, die eine Zuführquelle des Gegenstands ist, wobei die Steuereinrichtung (100) die Zuführeinrichtung und die Transporteinrichtung (140) so steuert, dass das Objekt in dem bestimmten Aufnahmeraum untergebracht wird, wobei das Computerprogramm dadurch die automatische Verarbeitungsvorrichtung (1000) in die Lage versetzt, ein Verfahren nach Anspruch 5 durchzuführen.

10. Computerprogramm nach Anspruch 9, das ferner Befehle umfasst, die, wenn sie von dem Computer ausgeführt werden, den Computer in die Lage versetzen, als Steuermittel (100) einer automatischen Verarbeitungsvorrichtung nach einem der Ansprüche 2 bis 4 zu wirken, wodurch das Computerprogramm die automatische Verarbeitungsvorrichtung in die Lage versetzt, ein Verfahren nach einem der Ansprüche 6 bis 8 durchzuführen.

## Revendications

1. Appareil de traitement automatique (1000) comprenant :
au moins deux types de moyen d'apport comportant un premier moyen d'apport (110) pour l'apport d'un objet, ayant jusqu'à une épaisseur prédéterminée, à un moyen de transport (140) et un deuxième moyen d'apport (120) pour l'apport d'un objet dépassant l'épaisseur prédéterminée au moyen de transport (140) ;
le moyen de transport (140) comportant une pluralité de boîtes de transport d'une taille similaire, la pluralité de boîtes de transport (142, 142a, 142b, 142c) comportant respectivement un organe de cloisonnement qui cloisonne un espace interne en une pluralité d'espaces d'accueil (141), la pluralité de boîtes de transport étant placées sur une piste de transport, et les espaces d'accueil respectivement cloisonnés par l'organe de cloisonnement ayant une largeur d'au moins l'une parmi une première largeur et une deuxième largeur plus large que la première largeur, le moyen de transport (140) déplaçant la pluralité de boîtes de transport le long de la piste de transport et accueillant l'objet apporté par le moyen d'apport à l'un parmi l'espace d'accueil (141) de la première largeur et l'espace d'accueil de la deuxième largeur ; et
un moyen de commande (100) déterminant d'accueillir l'objet apporté par le moyen d'apport dans les espaces d'accueil (141) de la première largeur et les espaces d'accueil (141) de la deuxième largeur, sur la base du moyen d'apport qui est une source d'apport de l'objet, le moyen de commande (100) commandant le moyen d'apport et le moyen de transport (140) de façon à accueillir l'objet dans l'espace d'accueil (141) déterminé.

2. Appareil de traitement automatique (1000) selon la revendication 1, dans lequel l'espace d'accueil (141) de la première largeur du moyen de transport (142) est constitué d'une première boîte de cloisonnement (141a), et l'espace d'accueil de la deuxième largeur de celui-ci est constitué d'une deuxième boîte de cloisonnement (141b).

3. Appareil de traitement automatique (1000) selon la revendication 2, comprenant en outre :
un moyen de reconnaissance (130) prévu dans les deux types de moyen d'apport (110, 120) pour reconnaître et acquérir des premières informations décrites sur une surface de l'objet reçu ; et
un moyen de tri (150) comportant une pluralité d'adresses cloisonnées par des parois ayant une largeur égale,
dans lequel le moyen de commande (100) détermine la première boîte de cloisonnement (141a) ou la deuxième boîte de cloisonnement (141b) dans laquelle l'objet est libéré et l'adresse du moyen de tri (150) pour commander une libération, sur la base d'informations portant sur la première boîte de cloisonnement (141a) ou la deuxième boîte de cloisonnement (141b) accueillant l'objet et de premières informations reçues en provenance du moyen de reconnaissance.

4. Appareil de traitement automatique selon la revendication 1, dans lequel l'organe de cloisonnement qui cloisonne l'intérieur du moyen de transport en la pluralité d'espaces d'accueil est constitué d'une plaque de cloisonnement.

5. Procédé de traitement automatique d'un appareil de traitement automatique (1000), qui comporte,
par un premier moyen d'apport (110), l'apport d'un objet, ayant jusqu'à une épaisseur prédéterminée, à un moyen de transport,
et par un deuxième moyen d'apport (120), l'apport d'un objet dépassant l'épaisseur prédéterminée au moyen de transport ;
l'utilisation d'un moyen de transport (140), qui comporte une pluralité de boîtes de transport (142, 142a, 142b, 142c) d'une taille similaire, comportant respectivement un organe de cloisonnement qui cloisonne un espace interne en une pluralité d'espaces d'accueil (141), et la pluralité de boîtes de transport sont placées sur une piste de transport et les espaces d'accueil, respectivement cloisonnés par l'organe de cloisonnement possèdent une largeur d'au moins l'une parmi une première largeur et une deuxième largeur plus large que la première largeur,
le déplacement de la pluralité de boîtes de transport (142, 142a, 142b, 142c) le long de la piste de transport pour accueillir l'objet apporté par le moyen d'apport à l'un parmi l'espace d'accueil de la première largeur et l'espace d'accueil de la deuxième largeur,
par un moyen de commande (100), la détermination d'accueillir l'objet apporté par le moyen d'apport (110, 120) dans les espaces d'accueil de la première largeur (141a) et les espaces d'accueil de la deuxième largeur (141b), sur la base du moyen d'apport qui est une source d'apport de l'objet et pour commander le moyen d'apport et le moyen de transport (140) de façon à accueillir l'objet dans l'espace d'accueil déterminé.

6. Procédé de traitement automatique de l'appareil de traitement automatique selon la revendication 5, dans lequel l'espace d'accueil de la première largeur du moyen de transport est constitué d'une première boîte de cloisonnement (141a), et l'espace d'accueil de la deuxième largeur de celui-ci est constitué d'une deuxième boîte de cloisonnement (141b).

7. Procédé de traitement automatique de l'appareil de traitement automatique selon la revendication 6, dans lequel l'appareil de traitement automatique (1000) comporte en outre :
un moyen de reconnaissance (130) prévu dans les deux types de moyen d'apport (110, 120) pour reconnaître et acquérir des premières informations décrites sur une surface de l'objet reçu ; et
un moyen de tri (150) comportant une pluralité d'adresses cloisonnées par des parois ayant une largeur égale,
dans lequel le moyen de commande (100) détermine la première boîte de cloisonnement (141a) ou la deuxième boîte de cloisonnement dans laquelle l'objet est libéré et l'adresse du moyen de tri pour commander une libération, sur la base d'informations portant sur la première boîte de cloisonnement ou la deuxième boîte de cloisonnement (141b) accueillant l'objet et de premières informations reçues en provenance du moyen de reconnaissance (130).

8. Procédé de traitement automatique de l'appareil de traitement automatique (1000) selon la revendication 5, dans lequel l'organe de cloisonnement qui cloisonne l'intérieur du moyen de transport (140) en la pluralité d'espaces d'accueil est constitué d'une plaque de cloisonnement.

9. Programme d'ordinateur comprenant des instructions exécutables par ordinateur, qui lors de leur exécution sur un ordinateur, amènent ledit ordinateur à jouer le rôle du moyen de commande (100) d'un appareil de traitement automatique (1000), ledit appareil de traitement automatique comprenant :
au moins deux types de moyen d'apport (110, 120) comportant un premier moyen d'apport (110) pour l'apport d'un objet, ayant jusqu'à une épaisseur prédéterminée, à un moyen de transport et un deuxième moyen d'apport (120) pour l'apport d'un objet dépassant l'épaisseur prédéterminée au moyen de transport ;
le moyen de transport (140) comportant une pluralité de boîtes de transport (142, 142a, 142b, 142c) d'une taille similaire, la pluralité de boîtes de transport comportant respectivement un organe de cloisonnement qui cloisonne un espace interne en une pluralité d'espaces d'accueil (141), la pluralité de boîtes de transport étant placées sur une piste de transport (143), et les espaces d'accueil respectivement cloisonnés par l'organe de cloisonnement ayant une largeur d'au moins l'une parmi une première largeur et une deuxième largeur plus large que la première largeur, le moyen de transport (140) déplaçant la pluralité de boîtes de transport le long de la piste de transport (143) et accueillant l'objet apporté par le moyen d'apport à l'un parmi l'espace d'accueil de la première largeur (141a) et l'espace d'accueil de la deuxième largeur (141b), et
lesdites instructions exécutables par ordinateur, lors de leur exécution sur ledit ordinateur, permettent audit ordinateur jouant le rôle dudit moyen de commande (100) de
déterminer d'accueillir l'objet apporté par le moyen d'apport dans les espaces d'accueil de la première largeur (141a) et les espaces d'accueil de la deuxième largeur (141b), sur la base du moyen d'apport qui est une source d'apport de l'objet, le moyen de commande (100) commandant le moyen d'apport et le moyen de transport (140) de façon à accueillir l'objet dans l'espace d'accueil déterminé, le programme d'ordinateur permettant ainsi audit appareil de traitement automatique (1000) de réaliser un procédé selon la revendication 5.

10. Programme d'ordinateur selon la revendication 9, comprenant en outre des instructions, qui lors de leur exécution par ledit ordinateur, permettent audit ordinateur de jouer le rôle d'un moyen de commande (100) d'un appareil de traitement automatique conformément à l'une des revendications 2 à 4, le programme d'ordinateur permettant ainsi audit appareil de traitement automatique de réaliser un procédé selon l'une des revendications 6 à 8.
